# EUROPÄISCHE PATENTSCHRIFT

(11) **EP 2 664 973 B1**
(45) Veröffentlichungstag und Bekanntmachung des Hinweises auf die Patenterteilung: **02.09.2015**
(21) Anmeldenummer: 13167866.6
(22) Anmeldetag: 15.05.2013
(51) Int. Cl.: G05B 19/4093, G05B 19/418

(54) **Verfahren zum Verwalten von Werkzeugdaten**
Method for managing tool data
Procédé de gestion des données outil

(30) Priorität: 16.05.2012 DE 102012208202
(43) Veröffentlichungstag der Anmeldung: 20.11.2013
(73) Patentinhaber: Widmann, Jürgen, 73527 Schwäbisch Gmünd (DE)
(72) Erfinder: Widmann, Jürgen, 73527 Schwäbisch Gmünd (DE)
(74) Vertreter: Schmid, Wolfgang

(56) Entgegenhaltungen:
- NEDELJKOVIC-GROHA V ET AL: "OBJEKTNAHE DATENHALTUNG IM FERTIGUNGSBEREICH", ZWF ZEITSCHRIFT FUR WIRTSCHAFTLICHE FERTIGUNG UNDAUTOMATISIERUNG, CARL HANSER VERLAG. MUNCHEN, DE, Bd. 88, Nr. 1, 1. Januar 1993 (1993-01-01) , Seiten 20-23, XP000336376, ISSN: 0947-0085

## Beschreibung

Die Erfindung betrifft ein Verfahren zum Verwalten von Werkzeugdaten.

In der DE 10 2006 024 904 A1 ist ein Verfahren zum Bereitstellen von Werkzeuggen für das Herstellen und/öder Bearbeiten von Gegenständen beschrieben.

Aus der DE 101 24275 A1 ist ein Verfahren zum Vermessen eines Werkzeugs mit Hilfe einer Messeinrichtung bekannt, die mit einer Auswerte- und Bedienenheit ausgestattet ist.

Ähnliche Verfahren sind auch aus der DE 102 37 426 A1, der DE 10 2004 018 968 A1 oder der DE 10 2006 016 886 A1 bekannt.

Aus der Veröffentlichung "Öbjektnahe Datenhaltung im Fertigungsbereich" von V. Nedeljkovic-Groha und B. Zipper aus ZWF CIM Zeitschrift für Wirtschaftliche Fertigung und Automatisierung, Carl Hanser Verlag, München, Band 88, Nr. 1, Januar 1993 (XP000336376) ist ein Verfahren zur Integration eines Werkzeug-Identifikationssystems in eine rechnergeführte Fertigung bekannt.

Bei diesen und ähnlichen, aus dem allgemeinen Stand der Technik bekannten Verfahren werden die Werkzeuge auf der Messeinrichtung stets für eine bestimmte Werkzeugmaschine vermessen. Während des Messvorgangs werden also die gemessenen Daten für die jeweilige Werkzeugmaschine, auf der das betreffende Werkzeug zum Einsatz kommen soll, aufbereitet. Die gemessenen Daten des Werkzeugs werden dann unmittelbar an die Werkzeugmaschine übertragen oder in einem Dateiverzeichnis für die Werkzeugmaschine bereitgestellt. Meist sind die hierfür verwendeten Messeinrichtungen mit einer umfangreichen Software ausgestattet und aufwändig in der Bedienung. Außerdem ist es vor dem Messvorgang erforderlich, bestimmte Daten des Werkzeugs und der Werkzeugmaschine in die Messeinrichtung einzugeben. Ein weiterer Nachteil besteht darin, dass bereits beim Messvorgang angegeben werden, für welche Werkzeugmaschine und an welchem Platz in der Werkzeugmaschine das Werkzeug bestimmt ist, was die Flexibilität erheblich reduziert.

Es ist daher Aufgabe der vorliegenden Erfindung, ein Verfahren zum Verwalten von Werkzeugdaten zu schaffen, das mit einem geringeren Aufwand und einer höheren Flexibilität als die bekannten Verfahren durchgeführt werden kann.

Erfindungsgemäß wird diese Aufgabe durch die in Anspruch 1 genannten Merkmale gelöst.

Das erfindungsgemäße Verfahren ermöglicht eine Werkzeugdatenverwaltung mit sehr viel geringerem Aufwand als bekannte Verfahren, da das gemessene Werkzeug nicht einer bestimmten Werkzeugmaschine zugeordnet ist, sondern grundsätzlich für jede Werkzeugmaschine verwendet werden kann. Dadurch kann das gemessene Werkzeug an jeder beliebigen Werkzeugmaschine eingesetzt werden, sodass ein und dieselbe Messeinrichtung für mehrere Werkzeugmaschinen verwendet werden kann. Außerdem ist es nicht erforderlich, an der Messeinrichtung Werkzeugsollwerte oder dergleichen einzugeben. Gemäß der Erfindung ist also unabhängig von der technischen Ausstattung und den technischen Möglichkeiten der Messeinrichtung eine Bereitstellung der in der Messeinrichtung erhaltenen Messdaten an die Werkzeugmaschine möglich. Die Messeinrichtung muss lediglich in der Lage sein, die gemessenen Rohdaten in einem maschinenlesbaren bzw. von einem Computer verarbeitbaren Format zu speichern.

Dadurch, dass es mit dem erfindungsgemäßen Verfahren nicht erforderlich ist, das Werkzeug einer bestimmten Werkzeugmaschine zuzuweisen, ergibt sich eine gegenüber bekannten Lösungen erheblich verbesserte Flexibilität, was für den Anwender einen großen Vorteil darstellt, da er die bei dem Verfahren eingesetzten Einrichtungen und Geräte an seine Bedingungen anpassen kann und nicht umgekehrt die in seinem Betrieb herrschenden Bedingungen an die zugekauften Messeinrichtungen anpassen muss.

Erfindungsgemäß kann darauf verzichtet werden, die Korrektur und die Konvertierung der Messdaten in der Messeinrichtung vorzunehmen, sodass die für den Messvorgang erforderliche Eingabe sehr viel einfacher und mit weniger Aufwand durchgeführt werden kann als bei aus dem Stand der Technik bekannten Lösungen. Hinzukommt, dass die Messeinrichtung einen erheblich geringeren Aufwand hinsichtlich der Softwareverwaltung erfordert, was ihren Kostenaufwand weiter verringert. Dadurch kann ein das erfindungsgemäße Verfahren einsetzende Anwender Kosten sparen oder alternativ eine größere Anzahl an Messeinrichtungen einsetzen, um auf diese Weise für jede Bedienperson einen kürzeren Weg zu der jeweiligen Messeinrichtung zu schaffen.

Durch das Übermitteln der aufbereiteten Werkzeugdaten an die Werkzeugmaschine zu dem Zeitpunkt, in dem klar ist, dass sich das Werkzeug, zu dem die ermittelten Messdaten gehören, an der Werkzeugmaschine befindet, wird verhindert, dass einem Werkzeug falsche Werkzeugdaten zugewiesen werden, wodurch schwere Bearbeitungsfehler vermieden werden können.

Das erfindungsgemäße Verfahren ermöglicht außerdem die Bevorratung von Rohdaten der gemessenen Werkzeugen, was bei aus dem Stand der Technik bekannten Verfahren nicht möglich ist.

Um eine eindeutige Zuordnung des Messvorgangs zu dem gemessenen Werkzeug zu generieren, wird bei dem erfindungsgemäßen Verfahren beim Übermitteln der Rohdaten an die Datenverwaltungseinrichtung eine Kennzeichnung, die eine Identifizierung des Messvorgangs erlaubt, erzeugt.

Eine besonders sichere Vorgehensweise, bei welcher verhindert wird, dass Werkzeugdaten zu früh bereitgestellt werden, wodurch es ansonsten zu Maschinenschäden kommen könnte, ergibt sich dadurch, dass die Information, dass das wenigstens eine Werkzeug an der Werkzeugmaschine eingetroffen ist, an die Datenverwaitungseinrichtung übermittett wird, sobald über eine Eingabeeinrichtung bestätigt wurde, dass das wenigstens eine Werkzeug an der Werkzeugmaschine eingetroffen ist.

Des Weiteren ist erfindungsgemäß vorgesehen, dass die Information, dass das wenigstens eine Werkzeug an der Werkzeugmaschine eingetroffen ist, durch eine das Werkzeug identifizierende Einleseeinrichtung erzeugt und an die Eingabeeinrichtung weitergegeben wird.

Um die Zuordnung des Werkzeugs in der Werkzeugmaschine auf einfache Weise zu bestimmen, kann in einer vorteilhaften Weiterbildung der Erfindung vorgesehen sein, dass Informationen über den Platz des Werkzeugs in der Werkzeugmaschine und/oder Informationen über die Werkzeugmaschine, an der das wenigstens eine Werkzeug eingetroffen ist, an die Datenverwaltungseinrichtung übermittelt werden.

Des Weiteren kann vorgesehen sein, dass die Rohdaten mehrerer für eine Bearbeitungsaufgabe dienender Werkzeuge als Datengruppe in der Datenverwaltungseinrichtung gespeichert werden. Dadurch kann bei komplexeren Bearbeitungsaufgaben eine ganze Gruppe von Werkzeugen bzw. ein Werkzeugsatz oder eine Werkzeugliste verwaltet werden.

Um einen einfachen und eindeutigen Zugriff auf die von der Messeinrichtung ermittelten Messdaten des Werkzeugs zu haben, kann in einer weiteren vorteilhaften Ausführungsform des erfindungsgemäßen Verfahrens vorgesehen sein, dass die Rohdaten und/oder eine die Identifizierung des Messvorgangs ermöglichende Kennzeichnung in elektronisch lesbarer Form in einem Speicherelement gespeichert werden, welches zumindest mittelbar an dem wenigstens einen Werkzeug angebracht ist.

Eine weitere vorteilhafte Ausführungsform des erfindungsgemäßen Verfahrens kann darin bestehen, dass an dem wenigstens einen Werkzeug zumindest mittelbar ein Informationsträger angebracht wird, welcher die Rohdaten und/oder eine die Identifizierung des Messvorgangs ermöglichende Kennzeichnung in schriftlicher Form aufweist. Auf diese Weise sind die von der Messeinrichtung ermittelten Messdaten auch ohne elektronische Einrichtungen direkt und eindeutig an dem Werkzeug erkennbar.

Eine Vorrichtung zum Verwalten von Werkzeugdaten ist in Anspruch 6 angegeben. Mit dieser Vorrichtung lässt sich das erfindungsgemäße Verfahren besonders einfach und sicher durchführen.

Dadurch, dass die Eingabeeinrichtung mit einer das wenigstens eine Werkzeug identifizierenden Einleseeinrichtung in Wirkverbindung steht, ergibt sich eine einfache Möglichkeit zur identifikation des an der Werkzeugmaschine eingetroffenen Werkzeugs und zur Weitergabe dieser Information an die Eingabeeinrichtung.

Nachfolgend ist ein Ausführungsbeispiel der Erfindung anhand der Zeichnung prinzipmäßig dargestellt.

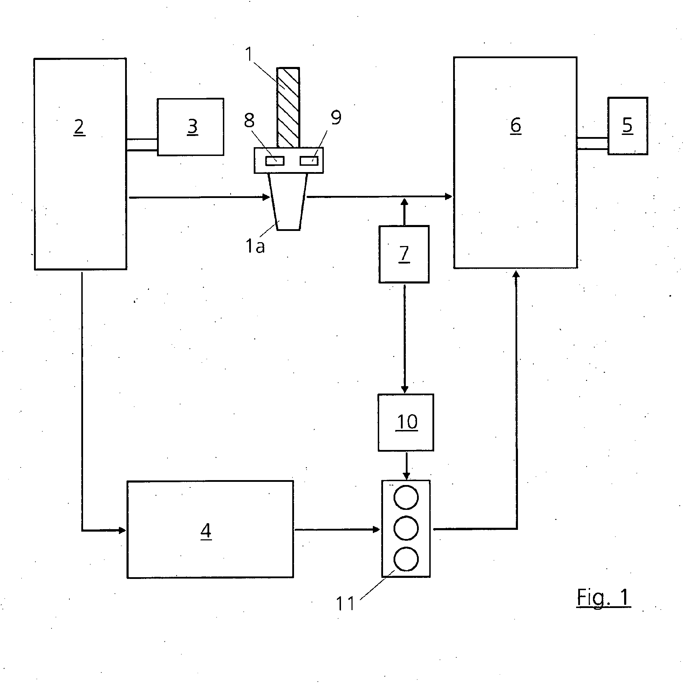

Fig. 1 zeigt eine Anordnung, mit der das erfindungsgemäße Verfahren zum Verwalten von Werkzeugen durchgeführt werden kann.

Die in Fig. 1 dargestellte Vorrichtung dient zur Durchführung eines Verfahrens zum Verwalten von Werkzeugdaten von Werkzeugen 1, die zur Bearbeitung von nicht dargestellten Werkstücken vorgesehen sind. Mit dem Begriff "Werkzeugdaten" sind im vorliegenden Fall die bei einer Messung ermittelten Messdaten des Werkzeugs 1, jegliche zusätzliche Informationen hinsichtlich des Werkzeugs 1 sowie aufbereitete Werkzeugdaten, die die bei einer Messung ermittelten Messdaten des Werkzeugs 1 und die zusätzlichen Informationen beinhalten können, umfasst. Im dargestellten Ausführungsbeispiel ist das Werkzeug 1 als Fräser ausgebildet, grundsätzlich ist das nachfolgend beschriebene Verfahren jedoch für alle Arten von Werkzeugen geeignet. Davon unabhängig ist auch die Art der Werkstücke, die mit den Werkzeugen 1 bearbeitet werden. Das Werkzeug 1 ist im vorliegenden Fall in einer Werkzeugaufnahme 1a aufgenommen, die von an sich bekannter Bauart sein kann, und wird in der Werkzeugaufnahme 1a transportiert. Grundsätzlich lässt sich mit dem nachfolgend beschriebenen Verfahren eine beliebige Anzahl an Werkzeugen 1 verwalten.

Das Werkzeug 1 wird in einem ersten Verfahrensschritt in einer Messeinrichtung 2 vermessen. Hierbei kann es sich um eine Einzelmessung, also die Messung eines einzelnen Werkzeugs 1, oder um eine Sammelmessung, also die Messung mehrerer Werkzeuge 1 bzw. einer Gruppe von Werkzeugen 1 handeln. Die Messeinrichtung 2 kann in an sich bekannter Weise ausgeführt sein und die Messvorgänge auf an sich bekannte Weise ausführen. Im vorliegenden Fall weist die Messeinrichtung 2 einen Computer 3 auf, der vorzugsweise als Steuerung und Eingabe- bzw. Bedienteil für die Messeinrichtung 2 dienen kann. Da für die Vermessung der Werkzeuge 1 in der Messeinrichtung 2 an sich bekannte Verfahren eingesetzt werden können, wird auf diese nachfolgend nicht näher eingegangen. Die Vermessung des Werkzeugs 1 mittels der Messeinrichtung 2 kann zum Beispiel mit optischen Mitteln erfolgen.

Bei der Vermessung der Werkzeuge 1 in der Messeinrichtung 2 werden Messdaten der Werkzeuge 1 erhalten, die nachfolgend als Werkzeugmessdaten bezeichnet werden. Die bei der Vermessung des Werkzeugs 1 in der Messeinrichtung 2 erhaltenen Werkzeugmessdaten werden als Rohdaten an eine Datenverwaltungseinrichtung 4 übermittelt. Beim Übermitteln der Rohdaten an die Datenverwaltungseinrichtung 4 kann eine Messvorgangsnummer oder eine ähnliche Kennzeichnung erzeugt werden, die eine Identifizierung des Messvorgangs erlaubt. In der Datenverwaltungseinrichtung 4 werden die Rohdaten gespeichert. Insbesondere werden die Rohdaten in der Datenverwaltungseinrichtung 4 temporär gespeichert, so dass sie zu einem späteren Zeitpunkt wieder gelöscht werden können.

In der Datenverwaltungseinrichtung 4 werden die Rohdaten in aufbereitete Werkzeugdaten konvertiert. Die Aufbereitung der Rohdaten in die aufbereiteten Werkzeugdaten erfolgt auf eine solche Art und Weise, dass die aufbereiteten Werkzeugdaten von einer Steuereinrichtung 5 einer Werkzeugmaschine 6, die zur Bearbeitung von Werkstücken mittels des Werkzeugs 1 vorgesehen ist, gelesen werden können. Vorzugsweise können die an die Steuereinrichtung 5 der Werkzeugmaschine 6 übermittelten aufbereiteten Werkzeugdaten nicht manuell editiert werden, so dass eine Manipulation ausgeschlossen ist. In der Datenverwaltungseinrichtung 4 werden also die zur Umsetzung der Rohdaten in die aufbereiteten Werkzeugdaten notwendigen Korrekturen und/oder Ergänzungen vorgenommen, wozu eine geeignete Software in der Datenverwaltungseinrichtung 4 vorgesehen sein kann. Bei den Ergänzungen kann es sich beispielsweise um Informationen im Hinblick auf den Platz des Werkzeugs 1 in einem Werkzeugspeicher bzw. -magazin handeln. Vorzugsweise werden die Ergänzungen erst dann vorgenommen, wenn feststeht, dass das Werkzeug 1 von der Werkzeugmaschine 6 verwendet wird. Die aufbereiteten Werkzeugdaten können dann in Form einer Datei vorliegen.

Es ist alternativ auch möglich, dass die Messeinrichtung 2 bereits aufbereitete Werkzeugmessdaten an die Datenverwaltungseinrichtung 4 übermittelt. In diesem Fall ist die beschriebene Konvertierung der Rohdaten in aufbereitete Werkzeugdaten nicht erforderlich.

Die von der Datenverwaltungseinrichtung 4 aus den Rohdaten aufbereiteten Werkzeugdaten oder die von der Messeinrichtung 2 an die Datenverwaltungseinrichtung 4 übermittelten Werkzeugdaten des Werkzeugs 1 können von der Werkzeugmaschine 6 verarbeitbare Werkzeugdaten enthalten. Beispielsweise kann es sich dabei um Geometriedaten des Werkzeugs 1 handeln. Grundsätzlich können mit der Messeinrichtung 2 auch verschiedene andere Informationen des Werkzeugs 1 erfasst werden, wobei auf bekannte Techniken zurückgegriffen werden kann.

Die Werkzeugmaschine 6 weist eine nicht dargestellte, vorzugsweise an einem ebenfalls nicht dargestellten Werkzeugmagazinplatz angeordnete Aufnahme für das Werkzeug 1 bzw. die Werkzeugaufnahme 1a auf, um mit dem Werkzeug 1 das Werkstück in an sich bekannter Weise zu bearbeiten. Hierzu wird das zuvor in der Messeinrichtung 2 vermessene Werkzeug 1 an die Werkzeugmaschine 6 übergeben, wobei diese Übergabe grundsätzlich zu einem beliebigen Zeitpunkt erfolgen kann. Zum Zwecke der Aufnahme und Lagerung des Werkzeugs 1 kann die Werkzeugmaschine 6, wie oben angedeutet, ein nicht dargestelltes Magazin aufweisen, das in an sich bekannter Weise ausgeführt sein und mehrere Plätze zur Aufnahme der Werkzeuge 1 aufweisen kann. Dadurch kann eine im Prinzip beliebige Anzahl an Werkzeugen 1 in der Werkzeugmaschine 6 bevorratet werden. Ein solches Magazin der Werkzeugmaschine 6 kann seibstverständlich auch eine Zuführeinrichtung für die Werkzeuge 1 an die Spindel der Werkzeugmaschine 6 umfassen.

Sobald die Werkzeugmaschine 6 an die Datenverwaltungseinrichtung 4 eine Information übermittelt, dass das Werkzeug 1 an die Werkzeugmaschine 6 übergeben wurde, werden die auf die oben beschriebene Art und Weise in der Datenverwaltungseinrichtung 4 aufbereiteten Werkzeugdaten an die Werkzeugmaschine 6 übermittelt. Die aufbereiteten Werkzeugdaten eines bestimmten Werkzeugs 1 liegen also erst dann an der Werkzeugmaschine 6 vor, wenn klar ist, dass das betreffende Werkzeug 1 sich bereits im Zugriffsbereich der Werkzeugmaschine 6 befindet. Mit der Angabe "Zugriffsbereich" ist beispielsweise die Spindel der Werkzeugmaschine 6, der Werkzeugspeicher öder auch das unmittelbare Umfeld der Werkzeugmaschine 6 gemeint. Durch diese Vorgehensweise ist es möglich, bei der Vermessung der Werkzeuge 1 in der Messeinrichtung 2 darauf zu verzichten, die Werkzeuge 1 auf eine ganz bestimmte Werkzeugmaschine 6 einzumessen. Vielmehr können die in der Messeinrichtung 2 erlangten Rohdaten des Werkzeugs 1 für jede beliebige Werkzeugmaschine 6 verwendet werden.

Mit dem Übermitteln der Information, dass das Werkzeug 1 an die Werkzeugmaschine 6 übergeben wurde, kann auch der Platz des Werkzeugs 1 in der Werkzeugmaschine 6 bzw. in dem Magazin der Werkzeugmaschine 6 an die Datenverwaltungseinrichtung 4 übermittelt werden.

An der Werkzeugmaschine 6 befindet sich im vorliegenden Fall eine Einleseeinrichtung 7, die beispielsweise einen Barcode-Scanner und/oder einen RFID-Leser aufweisen kann und mit der es möglich ist, das Werkzeug 1 an der Werkzeugmaschine 6 zu identifizieren bzw. einzuchecken. Dies kann manuell von einer Bedienperson durchgeführt werden. Neben der Identifizierung des Werkzeugs 1 an der Werkzeugmaschine 6 mittels der Einleseeinrichtung 7 ist es alternativ auch möglich, das Werkzeug 1 manuell zu identifizieren.

Die oben erwähnte Messvorgangsnummer oder eine ähnliche Kennzeichnung, die eine Identifizierung des Messvorgangs erlaubt, und/oder die durch die Messeinrichtung 2 ermittelten Rohdaten des Werkzeugs 1 können in einem Speicherelement 8, das beispielsweise als RFID-Chip ausgebildet sein kann, gespeichert werden. Dadurch ist es möglich, die Messvorgangsnummer, die Rohdaten und/oder die aufbereiteten Werkzeugdaten beispielsweise mittels der Einleseeinrichtung 7 abzurufen. Vorzugsweise ist das Speicherelement 8 an der Werkzeugaufnahme 1a des Werkzeugs 1 angebracht. Es ist grundsätzlich möglich, die Messvorgangsnummer, die Rohdaten und/oder die aufbereiteten Werkzeugdaten in dem Speicherelement 8 in elektronisch lesbarer Form zu speichern.

Außerdem können die Messvorgangsnummer und/oder die Rohdaten und/oder die aufbereiteten Werkzeugdaten in Form eines Barcodes an dem Werkzeug 1 bzw. der Werkzeugaufnahme 1a angebracht sein. In einem solchen Barcode oder einem ähnlichen Verschlüsselungssystem sind die Messvorgangsnummer und/oder die Rohdaten und/oder die aufbereiteten Werkzeugdaten des Werkzeugs 1 also in verschlüsselter Form enthalten.

Zusätzlich ist im vorliegenden Fall ein zum Beispiel als Etikett ausgebildeter Informationsträger 9 an dem Werkzeug 1 bzw. an der Werkzeugaufnahme 1a desselben angebracht, welcher die Messwerte und/oder eine die Identifizierung des Messvorgangs ermöglichende Kennzeichnung, wie zum Beispiel die Messvorgangsnummer, in schriftlicher Form aufweist. Mit der Angabe "in schriftlicher Form" sind solche optischen Darstellungen gemeint, die es der Bedienperson ermöglichen, die Art, die Abmessungen oder andere Merkmale des Werkzeugs 1 unmittelbar zu erkennen. Beispielswiese kann es sich um Zahlen und Buchstaben handeln. Der Informationsträger 9 kann beispielsweise nach dem auf der Messeinrichtung 2 durchgeführten Messvorgang von einem sich zum Beispiel neben der Messeinrichtung 2 befindlichen Drucker erzeugt werden, der vorzugsweise mit der Datenverwaltungseinrichtung 4 verbunden ist. Dieser Drucker wird vorzugsweise über die Software der Datenverwaltungseinrichtung 4 gesteuert.

Die Anordnung weist im vorliegenden Fall außerdem eine Eingabeeinrichtung 10 auf, die beispielsweise als mit einer Bedienoberfläche ausgestatteter Computer ausgebildet sein kann, über welchen eine Bedienperson das Übermitteln der aufbereiteten Werkzeugdaten an die Steuereinrichtung 5 der Werkzeugmaschine 6 auslösen, d.h. die aufbereiteten Werkzeugdaten anfordern kann. In der Zeichnung ist dieses Auslösen der Übermittlung der aufbereiteten Werkzeugdaten mittels der Eingabeeinrichtung 10 durch eine Ampel 11 symbolisiert, was verdeutlichen soll, dass erst nach der durch die Eingabeeinrichtung 10 erfolgenden Freigabe die Aufbereitung der Rohdaten und die Übermittlung der aufbereiteten Werkzeugdaten an die Steuereinrichtung 5 der Werkzeugmaschine 6 erfolgt. Gemäß dem Verfahren zum Verwalten der Werkzeuge 1 kann vorgesehen sein, dass die Werkzeugmaschine 6 die Information, dass das Werkzeug 1 an die Werkzeugmaschine 6 übergeben wurde, erst dann an die Datenverwaltungseinrichtung 4 übermittelt, wenn diese Bestätigung durch die Bedienperson über die Eingabeeinrichtung 10 erfolgt ist. Mit anderen Worten, wenn die Bedienperson über die Eingabeeinrichtung 10 den Erhalt des Werkzeugs 1 bestätigt, werden die aufbereiteten Werkzeugdaten durch die Datenverwaltungseinrichtung 4 an die Steuereinrichtung 5 der Werkzeugmaschine 6 übermittelt. Auf diese Weise wird im Prinzip die Datenverwaltungseinrichtung 4 über die Eingabeeinrichtung 10 "ferngesteuert". Die Übertragung der aufbereiteten Werkzeugdaten kann in eine für die Werkzeugmaschine 6 bereitgestellte Datei erfolgen, auf die die Steuereinrichtung 5 der Werkzeugmaschine 6 Zugriff hat. Diese Übertragung kann in ein bestimmtes Verzeichnis erfolgen oder es ist eine Übertragung mittels einer seriellen Schnittstelle möglich. Die Eingabeeinrichtung 10 steht im vorliegenden Fall mit der Einleseeinrichtung 7 in Wirkverbindung. Dadurch kann die Einleseeinrichtung 7 die Information, dass das Werkzeug 1 an der Werkzeugmaschine 6 eingetroffen ist, an die Eingabeeinrichtung 10 weitergeben. Vorzugsweise sind mehrere Eingabeeinrichtungen 10 vorhanden, da die Datenverwaltungseinrichtung 4 vorzugsweise mit einer Vielzahl von Werkzeugmaschinen 6 gekoppelt ist und vorzugsweise jeder Werkzeugmaschine 6 eine separate Einleseeinrichtung 7 und eine separate Eingabeeinrichtungen 10 zugeordnet ist.

Es kann vorgesehen sein, dass die mittels der Messeinrichtung 2 erhaltenen Rohdaten des Werkzeugs 1 nur eine bestimmte zeitliche Haltbarkeit aufweisen. Auf diese Weise wird sichergestellt, dass die erhaltenen Rohdaten nur für einen bestimmten Zeitraum verwendet werden können. Dieser Zeitraum der Haltbarkeit kann beispielsweise in einem Bereich von 1 - 30 Tagen, jedoch auch in jedem anderen beliebigen Zeitraum frei könfigurierbar sein.

Die im vorliegenden Fall zwischen der Messeinrichtung 2, der Datenverwaltungseinrichtung 4, der Werkzeugmaschine 6, der Einleseeinrichtung 7 und der Eingabeeinrichtung 10 dargestellten Pfeile symbolisieren lediglich die Weiterleitung von Daten bzw. die Weiterleitung des Werkzeugs 1 und stehen nicht für vorhandene Datenleitungen oder dergleichen. Vorzugsweise sind die Messeinrichtung 2, die Datenverwaltungseinrichtung 4, die Werkzeugmaschine 6, die Einleseeinrichtung 7 und die Eingabeeinrichtung 10 mittels geeigneter Datenverbindungen miteinander verbunden. Diese Datenverbindungen können mittels Datenleitungen und/oder Netzwerken erfolgen. Die Datenverwaltungseinrichtung 4 kann auch in dem Computer 3 der Messeinrichtung 2 integriert sein bzw. die Funktionen der Datenverwaltungseinrichtung 4 können über den Computer 3 gesteuert werden.

Während im dargestellten Ausführungsbeispiel lediglich ein Werkzeug 1 dargestellt ist, ist es auch möglich, die Rohdaten bzw. die aufbereiteten Werkzeugdaten mehrerer für eine Bearbeitungsaufgabe dienender Werkzeuge 1 als Datengruppe in jeweiligen Dateien in der Datenverwaltungseinrichtung 4 zu speichern. Wenn mehrere Werkzeuge 1 in einem Vorgang vermessen werden, kann nur eine Datei erzeugt werden, die die Daten sämtlicher Werkzeuge 1 enthält. Alternativ kann auch für jedes Werkzeug 1 eine separate Datei erzeugt werden. In beiden Fällen werden die einzelnen Werkzeuge dieses Werkzeugsatzes bzw. dieser Werkzeugliste dennoch einzeln in der Messeinrichtung 2 vermessen.

## Patentansprüche

1. Verfahren zum Verwalten von Werkzeugdaten, mit folgenden Verfahrensschritten:
wenigstens ein Werkzeug (1) wird mit einer Messeinrichtung (2) vermessen, um Messdaten des Werkzeugs (1) zu erlangen,
die bei der Vermessung des Werkzeugs (1) in der Messeinrichtung (2) erhaltenen Messdaten werden als Rohdaten an eine Datenverwaltungseinrichtung (4) übermittelt und in der Datenverwaltungseinrichtung (4) gespeichert, wobei die in der Messeinrichtung erlangten Rohdaten des Werkzeugs nach einer Konvertierung für jede Werkzeugmaschine verwendet werden können,
beim Übermitteln der Rohdaten an die Datenverwaltungseinrichtung (4) wird eine Kennzeichnung, die eine Identifizierung des Messvorgangs erlaubt, erzeugt,
in der Datenverwaltungseinrichtung (4) werden die Rohdaten in von einer Steuereinrichtung (5) einer Werkzeugmaschine (6) lesbare, aufbereitete Werkzeugdaten konvertiert, wobei zur Umsetzung der Rohdaten in die aufbereiteten Werkzeugdaten notwendige Korrekturen und/oder Ergänzungen vorgenommen werden,
das wenigstens eine Werkzeug (1) wird zu einem beliebigen Zeitpunkt an die Werkzeugmaschine (6) übergeben,
die aufbereiteten Werkzeugdaten werden der Werkzeugmaschine (6) von der Datenverwaltungseinrichtung (4) bereitgestellt, nachdem die Datenverwaltungseinrichtung (4) eine Information erhält, dass das wenigstens eine Werkzeug (1) an der Werkzeugmaschine (6) eingetroffen ist,
die Information, dass das wenigstens eine Werkzeug (1) an der Werkzeugmaschine (6) eingetroffen ist, wird erst dann an die Datenverwaltungseinrichtung (4) übermittelt, wenn über eine Eingabeeinrichtung (10) bestätigt wurde, dass das wenigstens eine vermessene Werkzeug (1) an der Werkzeugmaschine (6) eingetroffen ist,
die Information, dass das wenigstens eine Werkzeug (1) an der Welkzeugmaschine (6) eingetroffen ist, wird durch eine das Werkzeug (1) identifizierende Einleseeinrichtung (7) erzeugt und an die Eingabeeinrichtung (10) weitergegeben.

2. Verfahren nach Anspruch 1,
**dadurch gekehnzeichnet**, dass Informationen über den Platz des Werkzeugs (1) in der Werkzeugmaschine (6) und/oder Informationen über die Werkzeugmaschine (6), an der das wenigstens eine Werkzeug (1) eingetroffen ist, an die Datenverwaltungseinrichtung (4) übermittelt werden.

3. Verfahren nach Anspruch 1 oder 2,
**dadurch gekenntzeichnet**, dass die Rohdaten mehrerer für eine Bearbeitungsaufgabe dienender Werkzeuge (1) als Datengruppe in der Datenverwaltungseinrichtung (4) gespeichert werden.

4. Verfahren nach einem der Ansprüche 1 bis 3,
**dadurch gekennzeichnet, dass** die Rohdaten und/oder eine die Identifizierung des Messvorgangs ermöglichende Kennzeichnung in elektronisch lesbarer Form in einem Speicherelement (8) gespeichert werden, welches zumindest mittelbar an dem wenigstens einen Werkzeug (1) angebracht ist.

5. Verfahren nach einem der Ansprüche 1 bis 4,
**dadurch gekenntzeichnet**, dass an dem wenigstens einen Werkzeug (1) zumindest mittelbar ein Informationsträger (9) angebracht wird, welcher die Messwerte und/oder eine die Identifizierung des Messvorgangs ermöglichende Kennzeichnung in schriftlicher Form aufweist.

6. Vorrichtung zum Verwalten von Werkzeugdaten, mit folgenden Merkmalen:
einer Messeinrichtung (2) zur Erlangung von Messdaten wenigstens eines Werkzeugs (1), wobei die in der Messeinrichtung durch Messdaten erlangten Rohdaten des Werkzeugs nach einer Konvertierung für jede Werkzeugmaschine verwendet werden können,
einer Datenverwaltungseinrichtung (4), in welcher die bei der Vermessung des Werkzeugs (1) in der Messeinrichtung (2) erhaltenen Messdaten als Rohdaten speicherbar und in von einer Steuereinrichtung (5) einer Werkzeugmaschine (6) lesbare, aufbereitete Werkzeugdaten konvertierbar sind,
einer Eingabeeinrichtung (10) zur Bestätigung, dass das wenigstens eine Werkzeug (1) an der Werkzeugmaschine (6) eingetroffen ist,
die Eingabeeinrichtung (10) steht mit der Datenverwaltungseinrichtung (4) in Wirkverbindung, um zu bewirken, dass die aufbereiteten Werkzeugdaten von der Datenverwaltungseinrichtung (4) der Werkzeugmaschine (6) bereitgestellt werden, nachdem die Datenverwaltungseinrichtung (4) von der Eingabeeinrichtung (10) eine Information erhält, dass das wenigstens eine Werkzeug (1) an der Werkzeugmaschine (6) eingetroffen ist,
wobei die Eingabeeinrichtung (10) mit einer das wenigstens eine Werkzeug (1) identifizierenden Einleseeinrichtung (7) in Wirkverbindung steht

## Claims

1. A method for managing tool data comprising the following steps:
at least one tool (1) is measured with a measuring device (2) in order to acquire data pertaining to the tool (1),
the data obtained during the measurement of the tool (1) and contained in the measuring device (2) are communicated to a data management device (4) and stored in this device (4) as raw data,
whereby the raw data for the tool contained in the measuring device, after being converted, can be used for any other machine-tool,
when the raw data are communicated to the data management device (4), a reference symbol is generated, which enables the measurement process to be identified
in the data management device (4), the raw data are converted into prepared tool data, which can be read by a control device (5) of a machine tool (6), whereby any corrections and/or additions that are required for the conversion of the raw data can be made to the prepared tool data,
at least one tool (1) is transferred at any given point to the machine tool (6),
the prepared tool data are made ready for the machine tool (6) by the data management device (4), once the data management system (4) has been informed that at least one tool (1) has arrived at the machine tool (6),
the information that at least one tool (1) has arrived at the machine tool (6) is not communicated to the data management system (4) until it has been confirmed by means of an input device (10) that the at least one measured tool (1) has arrived at the machine tool (6),
the information that at least one tool (1) has arrived at the machine tool (6) is generated by a scanning device (7) that identifies the tool (1) and communicates this to the input device (10).

2. Method according to Claim 1 above, **characterised in that** information on the position of the tool (1) in the machine tool (6) and/or information on the machine tool (6), at which the at least one tool (1) has arrived, is communicated to the data management device (4).

3. Method according to Claim 1 or 2 above, **characterised in that** the raw data from a number of tools (1) carrying out a processing function are stored as a data group in the data management device (4).

4. Method according to any of Claims 1 to 3 above, **characterised in that** the raw data and/or a reference system enabling the identification of the measuring process can be stored in an electronically legible form in a storage element (8), which is arranged at least indirectly on the at least one tool (1).

5. Method according to any of Claims 1 to 4 above, **characterised in that** at least one information carrier (9) is arranged at least indirectly on the at least one tool (1) and which contains in written form the measurements and/or a reference system enabling the measuring process to be identified.

6. Device for the management of tool data having the following features:
a measuring device (2) to obtain the measurements of at least one tool (1),
whereby the raw data for the tool contained in the measuring device, after being converted, can be used for any other machine-tool
a data management device (4), in which the measurements obtained during measuring the tool (1) in the measuring device (2) can be stored as raw data and can be converted into prepared tool data, which can be read in a control device (5) of a machine tool (6),
an input device (10) to confirm that the at least one tool (1) has arrived at the machine tool (6),
the input device (10) is functionally connected to the data management device (4) in order to ensure that the prepared tool data are made ready by the data management device (4) of the machine tool (6) once the data management device (4) has been informed by the input device (10) that the at least one tool (1) has arrived at the machine tool (6),
whereby the input device (10) is functionally connected to a scanning device (7) that identifies a tool (1).

## Revendications

1. Procédé de gestion de données d'outil, comprenant les phases de procédé suivantes :
au moins un outil (1) est soumis à des mesures au moyen d'une installation de mesure (2), de manière à obtenir des données de mesure de l'outil (1),
les données de mesure de l'outil (1) obtenues par des mesures effectuées par l'installation de mesure (2), sont transmises en tant que données brutes à une installation de gestion des données (4) et stockées dans l'installation de gestion des données (4),
selon lequel, les données brutes de l'outil, obtenues par l'installation de mesure, peuvent être utilisées, après une conversion, pour chaque machine-outil,
par la transmission des données brutes à l'installation de gestion des données (4), une caractéristique permettant une identification du processus de mesure est générée,
dans l'installation de gestion des données (4), les données brutes sont converties par une installation de pilotage (5) d'une machine-outil (6) en données machine lisibles, apprêtées, les corrections et/ou les améliorations nécessaires pour la transcription des données brutes en données machine apprêtées étant entreprises,
ledit au moins un outil (1) est transféré, à un moment souhaité sur la machine-outil (6),
les données machine apprêtées sont fournies par l'installation de gestion des données (4) à la machine-outil (6), après quoi l'installation de gestion des données (4) a reçu une information selon laquelle, ledit au moins un outil (1) a été transféré dans la machine-outil (6),
l'information relative au fait que ledit au moins un outil (1) a été transféré dans la machine-outil (6) ne sera transmise à l'installation de gestion des données (4) que lorsqu'une installation d'enregistrement des données (10) est sollicitée pour que ledit au moins un outil (1) ayant fait l'objet des mesures a été transféré dans la machine-outil (6),
l'information relative au fait que ledit au moins un outil (1) a été transféré dans la machine-outil (6), sera générée par une installation d'enregistrement d'identification (7) et transmise ensuite à l'installation d'enregistrement des données (10).

2. Procédé selon la revendication 1,
**caractérisé en ce que**,
des informations relatives à la position de l'outil (1) dans la machine-outil (6) et/ou des informations relatives à la machine-outil (6), sur laquelle ledit au moins un outil (1) a été transféré, sont transmises à l'installation de gestion des données (4).

3. Procédé selon la revendication 1 ou 2,
**caractérisé en ce que**,
les données brutes de plusieurs outils (1) requis pour l'exécution d'une tâche d'usinage, sont mémorisées en tant que groupe de données dans l'installation de gestion des données (4).

4. Procédé selon l'une des revendications 1 à 3,
**caractérisé en ce que**,
les données brutes et/ou une des caractéristiques permettant l'identification d'un processus de mesure sont lisibles sous une forme électronique dans un élément de mémorisation (8), qui est au moins indirectement monté sur ledit au moins un outil (1).

5. Procédé selon l'une des revendications 1 à 4,
**caractérisé en ce que**,
au moins un support d'information (9) est au moins indirectement lié audit au moins un outil (1), agencé pour stocker sous une forme écrite, les données de mesures et/ou une des caractéristiques permettant l'identification d'un processus de mesure.

6. Dispositif pour la gestion de données d'outil, ayant les caractéristiques suivantes :
une installation de mesure (2), pour capter des données de mesure d'au moins un outil (1), où, dans l'installation de mesure des données brutes acquises concernant le processus d'usinage, peuvent être utilisées pour chaque machine-outil après une conversion,
une installation de gestion des données (4), dans laquelle, lors de la mesure de l'outil (1), dans l'installation de mesure (2), les données de mesure acquises sous forme de données brutes, et lisibles, par une installation de pilotage (5) d'une machine-outil (6), sont apprêtées comme données d'outil convertibles, confirmées dans une installation d'enregistrement (10), pour confirmation, pour que ledit au moins un outil (1) soit transféré dans la machine-outil (6),
l'installation d'enregistrement (10) est en liaison opérationnelle avec l'installation de gestion des données (4), afin d'assurer que les données outil de l'installation de gestion des données (4) soient fournies à la machine-outil (6), après quoi l'installation de gestion des données (4) reçoit une information de l'installation d'enregistrement (10), concernant le fait que ledit au moins un outil (1) a été transféré dans la machine-outil (6),
l'installation d'enregistrement (10) étant en liaison opérationnelle avec une installation de lecture d'identification (7) d'au moins un outil (1).
